# EUROPEAN PATENT SPECIFICATION

(11) **EP 1 765 606 B1**
(45) Date of publication and mention of the grant of the patent: **12.03.2008**
(21) Application number: 04763071.0
(22) Date of filing: 01.07.2004
(51) Int. Cl.: B60C 1/00, B60C 11/16, C08K 9/04, C08K 3/34

(54) **STUDDED TIRE**
REIFEN MIT STOLLEN
PNEU CLOUTE

(43) Date of publication of application: 28.03.2007
(73) Proprietor: PIRELLI TYRE S.p.A., 20126 Milano (IT)
(72) Inventor: ROMANI, Francesco, Pirelli Tyre S.p.A., I-20126 Milano (IT); DE CANCELLIS, Pierluigi, Pirelli Tyre S.p.a., I-20126 Milano (IT)
(74) Representative: Bottero, Claudio
(86) International application number: PCT/EP2004/007194
(87) International publication number: WO 2006/002672

(56) References cited:
- EP-A- 1 055 509
- EP-A- 1 211 283
- EP-A- 1 273 616
- GB-A- 2 370 280

## Description

### Field of the invention

The present invention relates to a studded tire for a vehicle wheel.

As studded tire is generally intended a tire particularly suitable for driving on icy or snowy surfaces. It is characterized by a tread band containing a plurality of anti-slip elements (hereinafter referred to as "studs") partially projecting from the radially outer surface of the tread band. The tread band is provided with a tread pattern suitable for use on snow-covered and/or icy ground, and showing a plurality of longitudinal and transverse grooves which define a corresponding plurality of blocks and/or ribs into which the studs are inserted. A studded tire normally has about 200/400 studs.

### Prior art

Commonly, a studs is substantially a rigid metallic body, preferably made of steel, comprising a cylindrical or double-conical rod having, at the end contacting the ground, a tip made of a very hard material such as a tungsten carbide-based alloy, and at the other end an enlarged base to hold the stud in the tread band.

The studs can be fixed in the tread band after the tire has been cured by providing predetermined portions of the tread band with cavities for the positioning of the studs. The optional presence of an adhesive inside each cavity helps to retain the stud in position during use.

In more recent techniques, methods have been developed by which a studded tire is produced by fixing the studs to the tread band during curing. Generally, the studs are inserted in seats provided in the vulcanization mold - before loading the latter with the green tire - so as to incorporate and fix said studs in the tread band during molding and vulcanization of the tire.

The adhesion of the stud to the tread band represents one of the critical aspect of this technology. When subjected to intense driving or braking torques or to the action of high transverse forces, such as those which occur with sports type driving conditions, in particular during competitions, the studs are forced out of tread band, thus being lost along the road and adversely affecting in this way the performance of the tire.

Rubber compositions which are suitable for the tread bands usually do not show sufficient adhesion to the metal materials forming the core of the stud. In this connection, as reported, e.g., by EP 1 055 509, corresponding to the preamble of claim 1, the stud can be treated with a chemical agent or provided with a coating layer which acts as an interface, creating a bond between the metal and the rubber composition. On the other side, adhesion promoting additives can be employed as ingredients of the rubber composition, for example, organo-metallic complexes based on boron and/or cobalt, a resorcin/hexa-methoxy-methyl-melamine (HMMM) system, or a combination thereof.

The tread band for studded tires desirably shows high modulus, especially at low deformations (10%, 50%, 100% modulus) combined with good tear resistance, which is related to high values of stress at break.

In order to increase the modulus of the tread band rubber composition, it is known in the art to add the rubber composition with polyaramide microfibers (for example, Kevlar^{®} pulp). However such a reinforcing filler is able to improve the moduli, but lessening the poor break properties, thus impairing the retention of the studs in the tread.

In addition, the presence of said filler negatively affects the workability of the rubber compositions because it confers an adversely high viscosity.

Therefore the need for a studded tire having a tread band with high modulus, being capable of retaining the studs in position even under heavy stresses, and being easily processed is still felt.

### Summary of the invention

The Applicant found that a studded tire with a tread band comprising layered nanosized inorganic material as reinforcing filler is endowed with the modulus and tear resistance features sought for this kind of tire.

The present invention relates to a tire for vehicle wheel according to the features of claim 1.

The present invention also encompasses the use of an elastomeric composition for improving the capability of a tread band for a tire according to the features of claim 40.

Preferably the layered nanosized inorganic material (b) has an individual layer thickness of from 0.01 nm to 30 nm, more preferably from 0.1 nm to 15 nm.

According to one preferred embodiment, said layered inorganic material (b) is intercalated in the elastomeric material.

According to one preferred embodiment, said layered inorganic material (b) is present in the elastomeric composition in an amount of from 1 phr to 120 phr, preferably from 5 phr to 80 phr.

For the purposes of the present description and the claims, the term "phr" means the parts by weight of a given component of the elastomeric composition per 100 parts by weight of the polymer components.

According to one preferred embodiment, the layered inorganic material (b) which may be used in the present invention may be selected, for example, from phyllosilicates such as: smectites, for example, montmorillonite, nontronite, beidellite, volkonskoite, hectorite, saponite, sauconite; vermiculite; halloisite; sericite; or mixtures thereof.

Montmorillonite is particularly preferred.

Example of layered inorganic material (b) which may be used according to the present invention and is available commercially is the product known by the name of Dellite^{®} 67G from Laviosa Chimica Mineraria S.p.A.

In order to render the layered inorganic material (b) more compatible with the diene elastomeric polymer (a) said layered inorganic material (b) may be surface-treated with at least one compatibilizer.

According to one preferred embodiment, said compatibilizer may be selected, for example, from the quaternary ammonium or phosphonium salts having general formula (I): 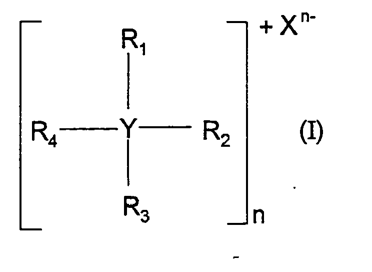 wherein:
- Y represents N or P;
- R₁, R₂, R₃ and R₄, which may be the same or different, represent a linear or branched C₁-C₂₀ alkyl or hydroxyalkyl group; a linear or branched C₁-C₂₀ alkenyl or hydroxyalkenyl group; a -R₅-SH or -R₅-NH group wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group optionally containing hetero atom such as oxygen, nitrogen or sulfur;
- Xⁿ⁻ represents an anion such as chlorine ion, sulfate ion or phosphate ion; and
- n represents 1, 2 or 3.

The surface treatment of the layered inorganic material (b) with the at least one compatibilizer can be carried out according to known methods such as, for example, by an ion exchange reaction between the layered inorganic material and the compatibilizer: further details are described, for example, in patents US 4,136,103, US 5,747,560 or US 5,952,093.

According to one preferred embodiment, the diene elastomeric polymer (a) which may be used in the present invention may be selected from those commonly used in sulfur-crosslinkable elastomeric compositions, that are particularly suitable for producing tires, that is to say from elastomeric polymers or copolymers with an unsaturated chain having a glass transition temperature (T_{g}) generally below 20°C, preferably below 10°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. Particularly preferred are 1,3-butadiene and isoprene.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from vinylpyridine, vinylquinoline, acrylic acid and alkylacrylic acid esters, nitriles, or mixtures thereof, such as methyl acrylate, ethyl acrylate, methyl methacrylate, ethyl methacrylate, acrylonitrile, or mixtures thereof.

Preferably, the diene elastomeric polymer (a) which may be used in the present invention may be selected from cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to one preferred embodiment, said elastomeric composition comprises at least 10% by weight, preferably from 20% by weight to 90% by weight, with respect to the total weight of the at least one diene elastomeric polymer (a), of natural rubber.

A diene elastomeric polymer (a) functionalized by reaction with suitable terminating agents or coupling agents may also be used. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, e.g., European patent EP 451 604, or patents US 4,742,124 and US 4,550,142).

Advantageously, the elastomeric composition of the tread band of the invention further comprises at least one carbon black (c) as additional reinforcing filler. The optional presence of carbon black helps to provide the studded tire according to the invention with improved ultimate properties, e.g. tear, break, wear and fatigue resistance.

Said at least one carbon black is preferably selected from those having a surface area of not less than 20 m²/g (determined by CTAB absorption as described in ISO standard 6810).

According to one preferred embodiment, said at least one carbon black reinforcing filler (c) is present in the elastomeric composition in an amount of from 0.1 phr to 120 phr, preferably from 20 phr to 90 phr.

Optionally, at least another one additional reinforcing filler may be added to the elastomeric composition of the tread band of the invention, in an amount generally of from 0.1 phr to 120 phr, preferably from 20 phr to 90 phr. Said another one additional reinforcing filler may be selected from those commonly used in the tire field, for example, silica, alumina, aluminosilicates, calcium carbonate, kaolin, or mixtures thereof.

The silica which may be used in the present invention may generally be a pyrogenic silica or, preferably, a precipitated silica, with a BET surface area (measured according to ISO standard 5794/1) of from 50 m²/g to 500 m²/g, preferably from 70 m²/g to 200 m²/g.

The elastomeric composition may advantageously further incorporate a silane (d). Besides to the capacity of the silane of interacting with the silica optionally present in the tread band of the invention as another additional reinforcing filler, and of linking said silica to the diene elastomeric polymer during the vulcanization, said silane provides the tread band of the studded tire of the invention with advantages also in the absence of silica by acting as an anti-revertion agent during the use of the tire.

The silane (d) advantageously used in the present invention may be selected from those having at least one hydrolizable silane group which may be identified, for example, by the following general formula (II):

(R)₃Si-C_{y}H_{2y}-Z (II)

wherein the groups R, which may be the same or different, are selected from alkyl, alkoxy or aryloxy groups or from halogen atoms, with the proviso that at least one of the groups R is an alkoxy or aryloxy group; n is an integer from 1 to 6; Z is a group selected from: nitroso, mercapto, amino, epoxide, vinyl, imide, chloro, -(S)ₘC_{y}H_{2y}-Si-(R)₃ wherein m and y are integers from 1 to 6 and the groups R are defined as above.

Among the silanes, particularly preferred are bis(3-triethoxysilyl-propyl)tetrasulfide and bis(3-triethoxysilylpropyl)-disulfide. Said silanes may be used as such or as a suitable mixture with an inert filler (for example carbon black) so as to facilitate their incorporation into the elastomeric composition.

According to one preferred embodiment, said silane (d) is present in the elastomeric composition in an amount of from 0.01 phr to 10 phr, preferably from 0.5 phr to 5 phr.

The elastomeric composition according to the present invention may be vulcanized according to known techniques, in particular with sulfur-based vulcanizing systems commonly used for diene elastomeric polymers.

The vulcanizing agent most advantageously used is sulfur, or molecules containing sulfur (sulfur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthogenates, or mixtures thereof.

Optionally, the elastomeric composition according to the present invention comprises other additives. For example, the following may be added to said composition: antioxidants, anti-ageing agents, adhesives, anti-ozone agents, modifying resins, or mixtures thereof.

For example, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, can be added to the elastomeric composition according to the present invention. The amount of plasticizer generally ranges from 1 phr to 100 phr, preferably from 5 phr to 50 phr.

For example, the elastomeric composition according to the present invention is prepared by mixing together the diene elastomeric polymer (a) with the layered nanosized inorganic material (b), with the additional reinforcing filler(s) and with the other additives optionally present, according to techniques known in the art. The mixing may be carried out, for example, using an open mixer of open-mill type, or an internal mixer of the type with tangential rotors (Banbury) or with interlocking rotors (Intermix), or using continuous mixers of Ko-Kneader type (Buss), or using co-rotating or counterrotating twin-screw extruders or single-screw extruders.

According to one preferred embodiment, said elastomeric composition further comprises at least one adhesion promoting additive (e).

A preferred adhesion promoting additive can be an organometallic complex based on boron and/or cobalt, the latter being linked together through oxygen. Particularly preferred complexes are cobalt carboxylates such as cobalt abietate, cobalt resonate, cobalt stearate, cobalt naphthenate, cobalt neodecanoate, cobalt boroacylate, cobalt naphthenates being the more preferred. Said complexes are commercially known with the trade name of Manobond^{®} and are generally used in combination with a high amount of sulfur.

A further adhesion promoting additive can be a resorcin/hexa-methoxy-methyl-melamine (HMMM) system which is generally used in combination with a medium/low amount of sulfur. Resorcin and HMMM react together and give rise to a layer interposed between the rubber blend and the metallic stud, said layer promoting the adhesion with the rubber and protecting the metal from aging, sulfur attack, moisture.

Moreover, it is also possible to use together an organometallic complex based on boron and/or cobalt and a resorcin/HMMM system, generally in combination with a high amount of sulfur.

Silica can also be used since it is known that, in general, it promotes the adhesion of rubber to metals.

The studs of the studded tire according to the invention can be chemically treated with a rubber-to-metal bonding agent prior to their insertion into radially outer surface of the tread band. More specifically, after cleaning, for example by sandblasting and/or phosphating, the studs are treated with a rubber-to-metal bonding agent, preferably by means of immersion. Examples of rubber-to-metal bonding agents for the present invention are products marketed by the company Henkel under the trade name Chemosil^{®}.

Furthermore, according to another embodiment of the present invention, the studs are generally made of an internal steel core coated with one or more layers of a another metal or metal alloy apt to improve the adhesion to rubber and to protect the steel core from corrosion.

The preferred coating material is brass, although other coating materials, such as alloys containing Cu, Zn, Ni, Co or Mn, can be used. In the preferred case a brass coating is used, adhesion is particularly favored by the formation during vulcanization of bisulfide bridges (-S-S-) between the elastomeric matrix of the tread band and the copper, which is a component of brass. Methods which can be employed for coating a stud with a brass layer are, for instance, plating or diffusion. The first comprises electrolytic plating of copper and zinc, while the second comprises electro-plating of one or more layers of copper on the stud followed by the electro-plating of a layer of zinc and by a thermal treatment that diffuses the zinc in the copper layers, thus forming a brass layer. Studs are, preferably, brass-coated with a metal composition consisting of from 30% to 40% by weight in zinc and from 70% to 60% by weight in copper, to form a layer of brass which is from 1 µm to 2 µm, preferably equal to 1.5 µm, in thickness.

### Brief description of the drawings

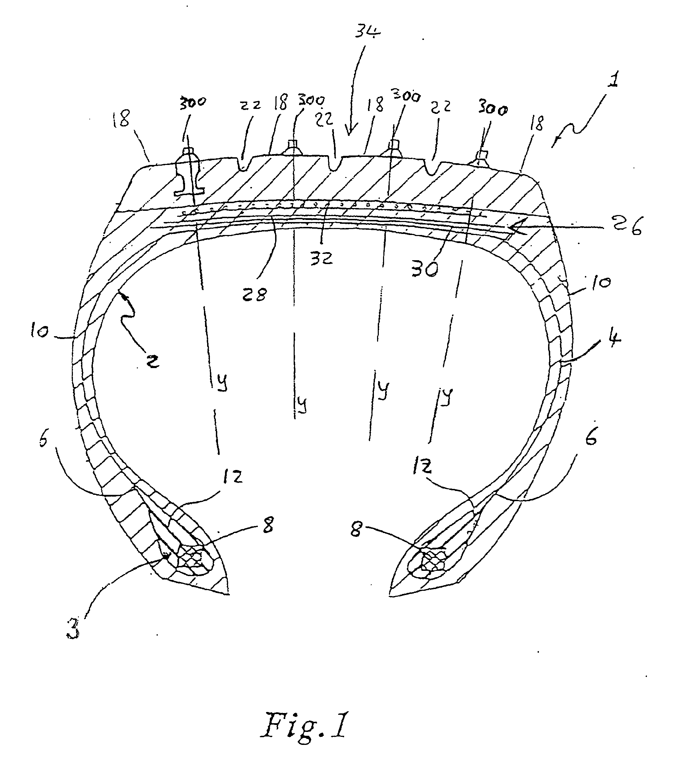

The invention will be further illustrated hereinafter with reference to the following examples and figures, wherein Figure 1 shows a cross right section through a studded tire according to the present invention.

### Detailed description of the preferred embodiments

Tire 1 comprises a toroidally shaped carcass 2 comprising at least one rubberized fabric ply 4 (hereinafter referred to as "carcass ply"). The carcass ply 4 generally consists of a plurality of reinforcing cords arranged parallel to each other and at least partially coated with a layer of elastomeric material. These reinforcing cords are usually made of textile fibers, for example rayon, nylon or polyethylene terephthalate, or of steel wires stranded together, coated with a metal alloy (for example copper/zinc, zinc/manganese, zinc/molybdenum/cobalt alloys and the like).

The carcass ply 4 is usually of radial type, i.e. it incorporates reinforcing cords arranged in a substantially perpendicular direction relative to a circumferential direction.

In one embodiment, the carcass ply 4 has its ends 6 each fixed to a metallic, annular core, known and referred to hereinbelow as reinforcing bead core 8. Said bead core 8 is provided on its radially external surface with a rubber filling element 12. As is known, the zone of the tire comprising bead core 8 and filling element 12 forms the bead assembly 3 which is intended for fixing tire 1 to a corresponding mounting rim.

The association between carcass ply 4 and bead assemblies 3 is achieved here by folding back the opposite ends 6 of the carcass ply 4 around the bead assemblies 3 so as to form the so-called carcass back-folds shown in Fig. 1.

Alternatively, the conventional bead assemblies 3 may be replaced with a pair of annular inserts formed from elongate components arranged in concentric coils (not represented in Fig. 1) (see, for example, EP-A-0 928 680 and EP-A-0 928 702 in the name of the Applicant). In this case, the carcass ply 4 is not back-folded around said annular inserts, the coupling being provided by a second carcass ply (not represented in Fig. 1) applied externally over the first.

A belt structure 26 which is arranged in a radial external position with respect to the crown of carcass 2, and substantially extends from one side to the other of the tire, i.e. as wide as tread band 34. According to the present embodiment, belt structure 26 comprises at least two rubberized fabric strips 28 and 30 which are radially superimposed and provided with textile or metallic reinforcing cords which are parallel to one another in each layer, mutually intersecting with those of the adjacent layer and with respect to the equatorial plane of the tire. Belt structure 26 also comprises a radially outermost strip 32 provided with textile or metallic reinforcing cords, oriented at 0°, i.e. in a circumferential direction with respect to the tire.

Sidewalls 10 are applied externally onto the carcass ply 4, these sidewalls extending, in an axially external position, from the bead assemblies 3 to the end of the belt structure 26.

A tread band 34, whose lateral edges are connected to sidewalls 10, is applied circumferentially in a position radially external to the belt structure 26. The tread band 34 comprises a radially outer surface intended for the rolling contact of the tire on the ground is arranged in known manner. The outer surface is provided with grooves 22 which are formed in the thickness of the tread band 34 and define a plurality of blocks and/or ribs 18. The combination of these structural elements, in various configurations, produces different tread patterns suitable for performing on snowy and/icy grounds.

The thickness of the tread band in studded tires for four-wheeled vehicles is normally of from 14 mm to 25 mm, more preferably of from 15 mm to 20 mm. In any case, the thickness of the tread band may also be not uniform but, for example, greater near its outer edges and/or at the central zone thereof.

Tread band 34 has, inserted in it, a plurality of studs, some of which are shown with reference sign 300 in Figure 1, wherein only the part projecting from the external surface of tread band 34 can be seen. The whole body of only one stud is shown.

It can be noted that, for reasons of curvature of the external surface of the tread band, the studs, which are perpendicular to said surface, are not arranged parallel to one another but along axes y converging radially towards the inside of the tire.

Examples of studs 300 are illustrated, e.g., EP-A-1 055 509 in the Applicant's name.

A strip made of elastomeric material, commonly known as a "mini-sidewall" (not represented in Fig. 1), may optionally be present in the connecting zone between the sidewalls 10 and the tread band 34, this mini-sidewall generally being obtained by coextrusion with the tread band 34 and allowing an improvement in the mechanical interaction between the tread band 34 and the sidewalls 10. Alternatively, the end portion of the sidewall 10 directly covers the lateral edge of the tread band 34.

A layer of elastomeric material (not represented in Fig. 1) which serves as an attachment sheet to provide connection between the tread band 34 and the belt structure 26, may be placed between the tread band 34 and the belt structure 26.

A rubber layer (not shown in Fig. 1) generally known as a "liner", which affords the necessary impermeability to the inflation air of the tire, is provided in a radially internal position relative to the carcass ply 4.

The process for producing the studded tire according to the present invention may be carried out according to techniques and using apparatus that are known in the art, as described, for example, in EP-B-0 199 064, US 4,872,822, US 4,768,937, said process including at least one stage of manufacturing the green tire and at least one stage of vulcanizing this tire.

More particularly, the process for producing the tire comprises the stages of preparing, beforehand and separately from each other, a series of semi-finished products corresponding to the various structural elements of the tire (carcass plies, belt structure, bead wires, fillers, sidewalls and tread band) which are then combined together using a suitable manufacturing machine. Next, the subsequent vulcanization stage welds the abovementioned semi-finished products together to give a monolithic block, i.e. the finished tire.

The stage of preparing the abovementioned semi-finished products will be preceded by a stage of preparing and molding the various blends, of which said semi-finished products are made, according to conventional techniques.

The green tire thus obtained is then passed to the subsequent stages of molding and vulcanization. To this end, a vulcanization mold is used which is designed to receive the tire being processed inside a molding cavity having walls which are counter-molded to define the outer surface of the tire when the vulcanization is complete.

Alternative processes for producing a tire or parts of a tire without using semi-finished products are disclosed, for example, in the abovementioned EP-A-0 928 680 and EP-A-0 928 702.

The green tire can be molded by introducing a pressurized fluid into the space defined by the inner surface of the tire, so as to press the outer surface of the green tire against the walls of the molding cavity. In one of the molding methods widely practiced, a vulcanization chamber made of elastomeric material, filled with steam and/or another fluid under pressure, is inflated inside the tire closed inside the molding cavity. In this way, the green tire is pushed against the inner walls of the molding cavity, thus obtaining the desired molding. Alternatively, the molding can be carried out without an inflatable vulcanization chamber, by providing inside the tire a toroidal metal support shaped according to the configuration of the inner surface of the tire to be obtained as described, for example, in EP-B-0 242 840. The difference in coefficient of thermal expansion between the toroidal metal support and the crude elastomeric material is exploited to achieve an adequate molding pressure.

At this point, the stage of vulcanizing the crude elastomeric material present in the tire is carried out. To this end, the outer wall of the vulcanization mold is placed in contact with a heating fluid (generally steam) such that the outer wall reaches a maximum temperature generally of from 100°C to 230°C. Simultaneously, the inner surface of the tire is heated to the vulcanization temperature using the same pressurized fluid used to press the tire against the walls of the molding cavity, heated to a maximum temperature of from 100°C to 250°C. The time required to obtain a satisfactory degree of vulcanization throughout the mass of the elastomeric material can vary in general from 3 min to 90 min and depends mainly on the dimensions of the tire. When the vulcanization is complete, the tire is removed from the vulcanization mold.

The studs can be inserted in the tread band at two different stages of the manufacturing of a studded tire.

In one embodiment, the studs can be fixed in the tread band after the tire has been cured. More precisely this method consists in providing predetermined portions of the tread band with cavities for the positioning of the studs. The studs are placed, usually manually, in these cavities so as the end designed to contact the ground projects from the tread band to a predetermined distance. The optional presence of an adhesive inside each cavity and the shape of each stud, in which the diameter of the base is greater than the rod, help to retain the stud in position during use.

Another method provide fixing the studs to the tread band during curing. For example, document EP 1 055 509 in the Applicant's name shows a method for manufacturing a studded tire comprising the following steps: making a green tire, inserting and securing the studs in specific seats of a curing mold, inserting the green tire in said mold, closing the mold, and vulcanizing to obtained the studded tire.

### EXAMPLES 1-4

### Preparation of the elastomeric compositions

The elastomeric compositions given in Table 1 were prepared as follows (the amounts of the various ingredients are given in phr).

All the ingredients, except sulfur, accelerator and retardant, were mixed together in an internal mixer (model Pomini PL 1.6) for about 5 min (1^{st} Step). As soon as the temperature reached 145±5°C, the elastomeric composition was discharged. The sulfur, the accelerator and the retardant were then added and mixing was carried out in an open roll mixer (2^{nd} Step).

**TABLE 1**

| EXAMPLE | 1 (*) | 2 (*) | 3 | 4 |
|---|---|---|---|---|
| 1^{st} Step | | | | |
| NR STR 20 | 66.5 | 66.5 | 70 | 70 |
| Buna CB-24 | 30 | 30 | 30 | 30 |
| Kevlar^{®} Pulp Latex | 4.35 | 4.35 | - | - |
| Carbon black N234 | 40 | 40 | 40 | 40 |
| Silica Ultrasil^{®} VN3 | 20 | 20 | - | - |
| SilaneDegussaX50S | 3.2 | 3.2 | 3.2 | 3.2 |
| Resorcine | 2.5 | - | 2.5 | - |
| Aromatic oil | 6 | 6 | 6 | 6 |
| Cobalt Naphthenate | 1 | - | 1 | - |
| Dellite^{®} 67G | - | - | 20 | 20 |

| 2^{nd} Step | | | | |
|---|---|---|---|---|
| TBBS | 1 | 1 | 1 | 1 |
| Insoluble Sulfur | 4.5 | 4.5 | 4.5 | 4.5 |
| 6PPD | 2 | 2 | 2 | 2 |
| Hexamethoxymethyl melamine | 4 | - | 4 | - |

| | | | | |
|---|---|---|---|---|
| (*): comparative. NR: natural rubber; Buna CB-24: butadiene rubber: Kevlar® Pulp Latex: highly fibrillated aramid dispersed in natural rubber (manufactured by DuPont); Silica Ultrasil^{®} VN3: amorphous precipitated silica by Degussa Silane Degussa X50S: bis(3-triethoxysilylpropyl)tetrasulfide dispersed at 50 wt% in carbon black N330 Aromatic oil: Agip Esar-90 6PPD: N-(1,3-dimethylbutyl)-N'-phenyl-p-phenylenediamine (Vulkanox^{®} 4020 by Bayer) Dellite^{®} 67G: organo-modified montmorillonite belonging to the smectite family (Laviosa Chimica Mineraria S.p.A.). | | | | |

The following Table 2 set forth physical and dynamic properties of the mixtures above.

The Mooney viscosity ML(1+4)? at 100°C was measured, according to ISO standard 289/1, on the non-crosslinked materials obtained as described above.

The static mechanical properties according to ISO standard 37 were measured at different elongation (10%, 50% 100% and 300%) both in the direction of calendering and in the direction perpendicular thereto on samples of said elastomeric compositions crosslinked at 170°C for 10 minutes.

Stress and elongation at break tests were carried out according to ISO 37-2 on dumbbell specimens.

The hardness in IRHD degrees at 23°C were measured on samples of said elastomeric compositions crosslinked at 150°C for 30 minutes, according to ISO standard 48. The Shore A was measured at 23°C according to ASTM Standard D2240.

The dynamic mechanical properties were measured using an Instron dynamic device in the traction-compression mode according to the following methods. A test piece of the crosslinked material having a cylindrical form (length = 25 mm; diameter = 14 mm) compression-preloaded up to 10% longitudinal deformation with respect to the initial length and kept at the prefixed temperature (23°C) for the whole duration of the test, was submitted to a dynamic sinusoidal strain with an amplitude ±3.33% with respect to the length under pre-load, with a frequency of 100 Hz. The dynamic mechanical properties are expressed in terms of dynamic elastic modulus (E') and tandelta (loss factor) values. As is known, the tandelta value is calculated as a ratio between the viscous modulus (E") and the elastic modulus (E'), both of them being determined with the above dynamic measurements.

**TABLE 2**

| EXAMPLE | 1 (*) | 2 (*) | 3 | 4 |
|---|---|---|---|---|
| Viscosity ML (1+4) | 64.3 | 77.4 | 48.2. | 56.4 |

| DUMBELL STRESS VS. STRAIN | | | | |
|---|---|---|---|---|
| 10% Modulus (MPa) | 1.78 | 0.82 | 1.83 | 1.70 |
| 50% Modulus (MPa) | 4.06 | 1.63 | 4.18 | 3.92 |
| 100% Modulus (MPa) | 6.28 | 3.13 | 7.17 | 6.95 |
| 300% Modulus (MPa) | 17.84 | 13.83 | 20.25 | 17.04 |
| Stress at break (MPa) | 19.97 | 18.77 | 22.50 | 19.95 |
| Elongation at break (%) | 352 | 453.4 | 345 | 420.2 |

| DYNAMIC MECHANICAL PROPERTIES | | | | |
|---|---|---|---|---|
| E' (23°C) (MPa) | 22.81 | 6.62 | 28.45 | 14.55 |
| Tan delta (23°C) | 0.218 | 0.170 | 0.221 | 0.1269 |

| HARDNESS | | | | |
|---|---|---|---|---|
| IRHD at 23°C | 90.2 | 70.5 | 91.3 | 80.4 |
| Shore A at 23°C | 85.0 | 68.0 | 84.7 | 82 |

| | | | | |
|---|---|---|---|---|
| (*): comparative. | | | | |

The results given in Table 2 show that the composition comprising the layered nanosized inorganic material according to the present invention (Examples 3 and 4) provides reinforcement to the elastomeric composition at least comparable to that provided by Kevlar^{®} and silica (Examples 1 and 2), while decreasing the viscosity value, thus improving the workability of the material.

### EXAMPLE 5

### Stud retention test:

Vehicle A and B (Subaru Impreza WRC passenger cars) were equipped with tires (Pirelli P-Zero J1) having a tread band comprising the elastomeric composition of Example 1 and 3, respectively. Each tire bore 384 studs provided in three circumferential rows (external, central and internal with respect to the vehicle side, the external being composed by three circumferential sub-rows).

The vehicles run along an ice-paved circuit of 10 km.

At the end of the test the number of studs missing from the front tires was counted. The results are set forth in Table 3.

As from Table 3 below, the vehicle equipped with the tire according to the invention showed no lost studs. In addition, said vehicle run the circuit in a time almost 10 seconds shorter than that equipped with the reference tires.

**TABLE 3**

| A | Going time (minutes) | Back time (minutes) | Lost Studs | | | | | | | |
|---|---|---|---|---|---|---|---|---|---|---|
| | | | Right-side tire | | | | Left-side tire | | | |
| | | | External row | Central row | Internal row | Total | Internal row | Central row | External row | Total |
| | 03:55.29 | 03:54.10 | 0 | 3 | 1 | 4 | 4 | 6 | 0 | 10 |
| | 03:51.85 | 03:53.23 | 0 | 0 | 0 | 0 | 0 | 0 | 0 | 0 |
| | 07:47.14 | 07:47.33 | Lost studs total 14 | | | | | | | |
| | | | | | | | | | | |

| B | Going time (minutes) | Back time (minutes) | Lost Studs | | | | | | | |
|---|---|---|---|---|---|---|---|---|---|---|
| | | | Right-side tire | | | | Left-side tire | | | |
| | | | External row | Central row | Internal row | Total | Internal row | Central row | External row | Total |
| | 03:48.23 | 03:48.73 | 0 | 0 | 0 | 0 | 0 | 0 | 0 | 0 |
| | 03:45.48 | 03:47.27 | 0 | 0 | 0 | 0 | 0 | 0 | 0 | 0 |
| | 07:33.71 | 07:36.00 | Lost studs total 0 | | | | | | | |

## Claims

1. Tire (1) for vehicle wheel, comprising:
- a carcass structure (2) including at least one carcass ply (4) shaped in a substantially toroidal configuration, the opposite lateral edges (6) of which are associated with respective right-hand and left-hand bead wires (8), each bead wire (8) being enclosed in a respective bead (3);
- a belt structure (26) applied in a circumferentially external position relative to said carcass structure (2);
- a tread band (34) circumferentially superimposed on said belt structure (26), comprising a radially outer surface with a tread pattern including a plurality of longitudinal and transverse grooves (22) which define a corresponding plurality of blocks and/or ribs (18);
- a plurality of studs (300) partially projecting from said radially outer surface of the tread band (34); and
- a pair of side walls (10) applied laterally on opposite sides relative to said carcass structure (2);
**characterized in that** said tread band (34) comprises a crosslinked elastomeric composition including:
(a) at least one diene elastomeric polymer;
(b) at least one layered nanosized inorganic material as reinforcing filler.

2. Tire (1) according to claim 1, wherein said layered inorganic material (b) has an individual layer thickness of from 0.01 nm to 30 nm.

3. Tire (1) according to claim 2, wherein said the layered inorganic material (b) has an individual layer thickness of from 0.1 nm to 15 nm.

4. Tire (1) according to claim 1, wherein said layered inorganic material (b) is present in the elastomeric composition in an amount of from 1 phr to 120 phr.

5. Tire (1) according to claim 4, wherein said layered inorganic material (b) is present in the elastomeric composition in an amount of from 5 phr to 80 phr.

6. Tire (1) according to claim 1, wherein said layered inorganic material (b) is selected from phyllosilicates such as: smectites; vermiculite; halloisite; sericite; or mixtures thereof.

7. Tire (1) according to claim 6, wherein said layered inorganic material (b) is selected from smectites such as: montmorillonite, nontronite, beidellite, volkonskoite, hectorite, saponite, sauconite or mixtures thereof.

8. Tire (1) according to claim 7, wherein said layered inorganic material (b) is montmorillonite.

9. Tire (1) according to claim 1, wherein said layered inorganic material (b) is surface-treated with at least one compatibilizer.

10. Tire (1) according to claim 9, wherein said compatibilizer is selected from the quaternary ammonium or phosphonium salts having general formula (I): 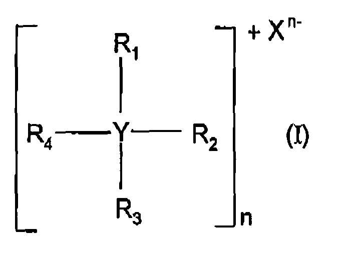 wherein:
- Y represents N or P;
- R₁, R₂, R₃ and R₄, which may be the same or different, represent a linear or branched C₁-C₂₀ alkyl or hydroxyalkyl group; a linear or branched C₁-C₂₀ alkenyl or hydroxyalkenyl group; a -R₅-SH or -R₅-NH group wherein R₅ represents a linear or branched C₁-C₂₀ alkylene group; a C₆-C₁₈ aryl group; a C₇-C₂₀ arylalkyl or alkylaryl group; a C₅-C₁₈ cycloalkyl group, said cycloalkyl group optionally containing hetero atom such as oxygen, nitrogen or sulfur;
- Xⁿ⁻ represents an anion such as chlorine ion, sulfate ion or phosphate ion; and
- n represents 1,2 or 3.

11. Tire (1) according to claim 1, wherein said diene elastomeric polymer (a) has a glass transition temperature (T_{g}) below 20°C.

12. Tire (1) according to claim 11, wherein said diene elastomeric polymer (a) has a glass transition temperature (T_{g}) below 10°C.

13. Tire (1) according to claim 1, wherein said diene elastomeric polymer (a) is selected from cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

14. Tire (1) according to claim 1, wherein said elastomeric composition comprises at least 10% by weight, with respect to the total weight of the at least one diene elastomeric polymer (a), of natural rubber.

15. Tire (1) according to claim 14, wherein said elastomeric composition comprises from 20% by weight to 90% by weight, with respect to the total weight of the at least one diene elastomeric polymer (a), of natural rubber.

16. Tire (1) according to claim 1, wherein said elastomeric composition comprises at least one carbon black as additional reinforcing filler (c).

17. Tire (1) according to claim 16, wherein said at least one carbon black reinforcing filler (c) has a surface area of not less than 20 m²/g (determined by CTAB absorption as described in ISO standard 6810).

18. Tire (1) according to claim 16 or 17, wherein said at least one carbon black reinforcing filler (c) is present in the elastomeric composition in an amount of from 0.1 phr to 120 phr.

19. Tire (1) according to claim 18, wherein said at least one carbon black reinforcing filler (c) is present in the elastomeric composition in an amount of from 20 phr to 90 phr.

20. Tire (1) according to claim 16, wherein at least one additional reinforcing filler is present in an amount of from 0,1 phr to 120 phr.

21. Tire (1) according to claim 1 and 16, wherein said elastomeric composition comprises at least another one additional reinforcing filler in an amount of from 20 phr to 90 phr,

22. Tire (1) according to claim 21, wherein said at least another one additional reinforcing filler is silica,

23. Tire (1) according to claim 1, wherein said elastomeric composition incorporates at least one silane (d).

24. Tire (1) according to claim 23, wherein said at least one silane (d) is selected from those having at least one hydrolizable silane group which may be identified by the following general formula (II):
(R)₃Si-C_{y}H_{2y}-Z (II)
wherein the groups R, which may be the same or different, are selected from alkyl, alkoxy or aryloxy groups or from halogen atoms, with the proviso that at least one of the groups R is an alkoxy or aryloxy group; n is an integer from 1 to 6; Z is a group selected from; nitroso, mercapto, amino, epoxide, vinyl, imide, chloro, -(S)ₘC_{y}H_{2y}-Si-(R)₃ wherein m and y are integers from 1 to 6, and the groups R are defined as above.

25. Tire (1) according to claim 24, wherein said at least one silane (d) is selected from bis(3-triethoxysilyl-propyl)tetrasulfide and bis(3-triethoxysilylpropyl)-disulfide.

26. Tire (1) according to claim 23, wherein said at least one silane (d) is present in the elastomeric composition in an amount of from 0,01 phr to 10 phr,

27. Tire (1) according to claim 26, wherein the at least one silane (d) is present in the elastomeric composition in an amount of from 0.5 phr to 5 phr,

28. Tire (1) according to claim 1, wherein said elastomeric composition comprises at least one adhesion promoting additive (e),

29. Tire (1) according to claim 28, wherein said adhesion promoting additive is selected among organometallic complexes based on boron, on cobalt or on both of them.

30. Tire (1) according to claim 29, wherein in said organometallic complexes based on cobalt and boron, cobalt and boron are linked together through oxygen.

31. Tire (1) according to claim 29, wherein said organometallic complexes are cobalt carboxylates,

32. Tire (1) according to claim 31, wherein said organometallic complex are cobalt naphthenate,

33. Tire (1) according to claim 28, wherein said at least one adhesion promoting additive (e) is a resorcin/hexa-methoxy-methyl-melamine (HMMM) system.

34. Tire (1) according to claim 33, wherein said HMMM system is used in combination with a medium/low amount of sulfur.

35. Tire (1) according to claim 28, wherein said at least one adhesion promoting additive is a combination of the additive as from claim 29 and the additive as from claim 33.

36. Tire (1) according to claim 35, wherein said combination is in combination with a high amount of sulfur.

37. Tire (1) according to claim 1, wherein said studs are chemically treated before being inserted into the radially outer surface of the tread band.

38. Tire (1) according to claim 37, wherein said studs are coated with at least one layer of a material selected from brass and alloys containing Cu, Zn, Ni, Co or Mn.

39. Tire (1) according to claim 38, wherein said studs are brass-coated with a metal composition consisting of from 30% to 40% by weight in zinc and from 70% to 60% by weight in copper to form a layer of brass which is from 1 µm to 2 µm in thickness.

40. Use of an elastomeric composition including:
(a) at least one diene elastomeric polymer;
(b) at least one layered nanosized inorganic material as reinforcing filler;
for improving the capability of a tread band (34) for a tire comprising a plurality of studs (300) partially projecting from a radially outer surface thereof to retain said studs (300) in position.

41. Use according to claim 40, wherein said layered inorganic material (b) is as defined in any one of claims 2, 3 and 6-10.

42. Use according to claim 40, wherein said layered inorganic material (b) is present in the elastomeric composition in an amount of from 1 phr to 120 phr.

43. Use according to claim 40, wherein said layered inorganic material (b) is present in the elastomeric composition in an amount of from 5 phr to 80 phr.

44. Use according to claim 40, wherein said diene elastomeric polymer (a) is as defined in any one of claims 11-15.

45. Use according to claim 40, wherein said elastomeric composition comprises at least one carbon black as additional reinforcing filler (c).

46. Use according to claim 45, wherein said at least one carbon black reinforcing filler (c) has a surface area of not less than 20 m²/g (determined by CTAB absorption as described in ISO standard 6810).

47. Use according to claim 45 or 46, wherein said at least one carbon black reinforcing filler (c) is present in the elastomeric composition in an amount of from 0.1 phr to 120 phr.

48. Use according to claim 47, wherein said at least one carbon black reinforcing filler (c) is present in the elastomeric composition in an amount of from 20 phr to 90 phr.

49. Use according to claim 40, wherein said elastomeric composition comprises at least one additional reinforcing filler in an amount of from 0,1 phr to 120 phr.

50. Use according to claim 49, wherein at least another one additional reinforcing filler is present in an amount of from 20 phr to 90 phr,

51. Use according to claim 49, wherein said at least another one additional reinforcing filler is silica.

52. Use according to claim 40, wherein said elastomeric composition incorporates at least one silane (d).

53. Use according to claim 52, wherein said at least one silane (d) is as defined in any one of claims 24 or 25.

54. Use according to claim 52, wherein said at least one silane (d) is present in the elastomeric composition in an amount of from 0.01 phr to 10 phr.

55. Use according to claim 54, wherein the at least one silane (d) is present in the elastomeric composition in an amount of from 0.5 phr to 5 phr.

56. Use according to claim 40, wherein said elastomeric composition comprises at least one adhesion promoting additive (e).

57. Use according to claim 56, wherein said adhesion promoting additive e) is as defined in any one of claims 29-36.

58. Use according to claim 40, wherein said studs (300) are chemically treated before being inserted into the radially outer surface of the tread band (34).

59. Use according to claim 58, wherein said studs (300) are coated with at least one layer of a material selected from brass and alloys containing Cu, Zn, Ni, Co or Mn.

60. Use according to claim 59, wherein said studs are brass-coated with a metal composition consisting of from 30% to 40% by weight in zinc and from 70% to 60% by weight in copper to form a layer of brass which is from 1 µm to 2 µm in thickness,

## Patentansprüche

1. Reifen (1) für ein Fahrzeugrad
- mit einem Karkassenaufbau (2), der wenigstens eine Karkassenlage (4) aufweist, die im Wesentlichen in eine Torusform gebracht ist und deren gegenüberliegende Seitenränder (6) entsprechenden rechten und linken Wulstdrähten (8) zugeordnet sind, von denen jeder in einen entsprechenden Wulst (3) eingeschlossen ist,
- mit einem Gurtaufbau (26), der in einer am Umfang äußeren Position bezüglich des Karkassenaufbaus (2) aufgebracht ist,
- mit einem Laufflächenband (34), das am Umfang auf den Gurtaufbau (26) aufgelegt ist und eine radial äußere Fläche mit einem Laufflächenmuster aufweist, das eine Vielzahl von Längs- und Quernuten (22) hat, die eine entsprechende Vielzahl von Blöcken und/oder Rippen (18) bilden,
- mit einer Vielzahl von Spikes (300), die teilweise aus der radial äußeren Fläche des Laufflächenbandes (34) vorstehen, und
- mit einem Paar von Seitenwänden (10), die seitlich auf gegenüberliegenden Seiten bezogen auf den Karkassenaufbau (2) aufgebracht sind,
**dadurch gekennzeichnet,**
- **dass** das Laufflächenband (34) eine vernetzte elastomere Mischung
(a) mit wenigstens einem elastomeren Dienpolymer; und
(b) mit wenigstens einem geschichteten anorganischen Material in Nanogröße als Verstärkungsfüllstoff aufweist.

2. Reifen (1) nach Anspruch 1, bei welchem das geschichtete anorganische Material (b) eine Einzelschichtdicke von 0,01 nm bis 30 nm hat.

3. Reifen (1) nach Anspruch 2, bei welchem das geschichtete anorganische Material (b) eine Einzelschichtdicke von 0,1 nm bis 15 nm hat.

4. Reifen (1) nach Anspruch 1, bei welchem das geschichtete anorganische Material (b) in der elastomeren Mischung in einer Menge von 1 phr bis 120 phr vorhanden ist.

5. Reifen (1) nach Anspruch 4, bei welchem das geschichtete anorganische Material (b) in der elastomeren Mischung in einer Menge von 5 phr bis 80 phr vorhanden ist.

6. Reifen (1) nach Anspruch 1, bei welchem das geschichtete anorganische Material (b) aus Phyllosilicaten, wie Smektiten, Vermiculit, Halloisit, Sericit oder Mischungen davon ausgewählt ist.

7. Reifen (1) nach Anspruch 6, bei welchem das geschichtete anorganische Material (b) aus Smektiten, wie Montmorillonit, Nontronit, Beidellit, Volkonskoit, Hektorit, Saponit, Sauconit oder Mischungen davon ausgewählt ist.

8. Reifen (1) nach Anspruch 7, bei welchem das geschichtete anorganische Material (b) Montmorillonit ist.

9. Reifen (1) nach Anspruch 1, bei welchem das geschichtete anorganische Material (b) mit wenigstens einem Kompatibilisator oberflächenbehandelt ist.

10. Reifen (1) nach Anspruch 9, bei welchem der Kompatibilisator aus den quaternären Ammonium- oder Phosphoniumsalzen mit der allgemeinen Formel (I) ausgewählt ist: 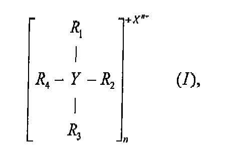 wobei
- Y für N oder P steht,
- R₁, R₂, R₃ und R₄, die gleich oder verschieden sein können, eine lineare oder verzweigte C₁ bis C₂₀-Alkyl- oder Hydroxyalkylgruppe; eine lineare oder verzweigte C₁ bis C₂₀-Alkenyl- oder Hydroxyalkenylgruppe; eine -R₅-SH- oder - R₅-NH-Gruppe, wobei R₅ für eine lineare oder verzweigte C₁ bis C₂₀-Alkylengruppe steht; eine C₆ bis C₁₈-Arygruppe; eine C₇ bis C₂₀-Arylalkyl- oder - Alkylarylgruppe; oder eine C₅ bis C₁₈-Cycloalkylgruppe darstellen, wobei die Cycloalkylgruppe fakultativ ein Heteroatom, wie Sauerstoff, Stickstoff oder Schwefel enthält;
- Xⁿ⁻ ein Anion, wie ein Chlorion, Sulfation oder Phosphation darstellt und
- n für 1, 2 oder 3 steht.

11. Reifen (1) nach Anspruch 1, bei welchem das elastomere Dienpolymer (a) eine Glasübergangstemperatur (T_{g}) unter 20°C hat.

12. Reifen (1) nach Anspruch 11, bei welchem das elastomere Dienpolymer (a) eine Glasübergangstemperatur (T_{g}) unter 10°C hat.

13. Reifen (1) nach Anspruch 1, bei welchem das elastomere Dienpolymer (a) aus Cis-1,4-polyisopren (natürlicher oder synthetischer, vorzugsweise natürlicher Kautschuk), 3,4-Polyisopren, Polybutadien (insbesondere Polybutadien mit einem hohen 1,4-Cis-Gehalt), fakultativ halogenierte Isopren/Isobuten-Copolymere, 1,3-Butadien/Acrylnitril-Copolymere, Styrol-/1,3-Butadien-Copolymere, Styrol-/Isopren-/1,3-Butadien-Copolymere, Styrol-/1,3-Butadien-/Acrylnitril-Copolymere oder Mischungen davon ausgewählt ist.

14. Reifen (1) nach Anspruch 1, bei welchem die elastomere Mischung bezogen auf das Gesamtgewicht des wenigstens einen elastomeren Dienpolymers (a) wenigstens 10 Gew.-% Naturkautschuk aufweist.

15. Reifen (1) nach Anspruch 14, bei welchem die elastomere Mischung bezogen auf das Gesamtgewicht des wenigstens einen elastomeren Dienpolymers (a) 20 Gew.-% bis 90 Gew.-% Naturkautschuk aufweist.

16. Reifen (1) nach Anspruch 1, bei welchem die elastomere Mischung wenigstens einen Ruß als zusätzlichen Verstärkungsfüllstoff (c) aufweist.

17. Reifen (1) nach Anspruch 16, bei welchem der wenigstens eine Ruß-Verstärkungsfullstoff (c) eine spezifische Oberfläche von nicht weniger als 20 m²/g (bestimmt durch CTAB-Absorption, wie in der Norm ISO 6810 beschrieben ist) hat.

18. Reifen (1) nach Anspruch 16 oder 17, bei welchem der wenigstens eine Ruß-Verstärkungsfüllstoff(c) in der elastomeren Mischung in einer Menge von 0,1 phr bis 120 phr vorhanden ist.

19. Reifen (1) nach Anspruch 18, bei welchem der wenigstens eine Ruß-Verstärkungsfüllstoff (c) in der elastomeren Mischung in einer Menge von 20 phr bis 90 phr vorhanden ist.

20. Reifen (1) nach Anspruch 16, bei welchem wenigstens ein zusätzlicher Verstärkungsfüllstoff in einer Menge von 0,1 phr bis 120 phr vorhanden ist.

21. Reifen (1) nach Anspruch 1 und 16, bei welchem die elastomere Mischung wenigstens einen weiteren zusätzlichen Verstärkungsfüllstoff in einer Menge von 20 phr bis 90 phr aufweist.

22. Reifen (1) nach Anspruch 21, bei welchem der wenigstens eine weitere zusätzliche Füllstoff Siliciumdioxid ist.

23. Reifen (1) nach Anspruch 1, bei welchem die elastomere Mischung wenigstens ein Silan (d) aufweist.

24. Reifen (1) nach Anspruch 23, bei welchem das wenigstens eine Silan (d) aus denjenigen ausgewählt ist, die wenigstens eine hydrolysierbare Silangruppe haben, die durch die folgende allgemeine Formel (II) dargestellt werden kann:
(R)₃Si-C_{y}H_{2y}-Z (II),
wobei die Gruppen R, die gleich oder verschieden sein können, aus Alkyl-, Alkoxy- oder Aryloxygruppen oder aus Halogenatomen unter der Bedingung ausgewählt sind, dass wenigstens eine der Gruppen R eine Alkoxy- oder Aryloxygruppe ist, n eine ganze Zahl von 1 bis 6 ist und Z eine Gruppe ist, die aus Nitroso-, Mercapto-, Amino-, Epoxid-, Vinyl- Imid-, Chlor-, -(S)ₘC_{y}H_{2y}-Si-(R)₃-Gruppe ausgewählt ist, bei denen m und y ganze Zahlen von 1 bis 6 und die Gruppen R wie vorstehend definiert sind.

25. Reifen (1) nach Anspruch 24, bei welchem das wenigstens eine Silan (d) aus Bis(3-triethoxysilyl-propyl)etrasulfid und Bis(3-triethoxysilylpropyl)-disulfid ausgewählt ist.

26. Reifen (1) nach Anspruch 23, bei welchem das wenigstens eine Silan (d) in der elastomeren Mischung in einer Menge von 0,01 phr bis 10 phr vorhanden ist.

27. Reifen (1) nach Anspruch 26, bei welchem das wenigstens eine Silan (d) in der elastomeren Mischung in einer Menge von 0,5 phr bis 5 phr vorhanden ist.

28. Reifen (1) nach Anspruch 1, bei welchem die elastomere Mischung wenigstens einen die Haftung begünstigenden Zusatzstoff oder solche Zusatzstoffe aufweist.

29. Reifen (1) nach Anspruch 28, bei welchem der die Haftung begünstigende Zusatzstoff aus organometallischen Komplexen basierend auf Bor, Kobalt oder beiden ausgewählt ist.

30. Reifen (1) nach Anspruch 29, bei welchem in den auf Kobalt und Bor basierenden organometallischen Komplexen Kobalt und Bor durch Sauerstoff miteinander verbunden sind.

31. Reifen (1) nach Anspruch 29, bei welchem die organometallischen Komplexe Kobaltcarboxylate sind.

32. Reifen (1) nach Anspruch 31, bei welchem der organometallische Komplex Kobaltnaphthenat ist.

33. Reifen (1) nach Anspruch 28, bei welchem der wenigstens eine die Haftung begünstigende Zusatzstoff bzw. solche Zusatzstoffe (e) ein Resorcin-/Hexamethoxymethylmelamin-(HMMM-)System ist/sind.

34. Reifen (1) nach Anspruch 33, bei welchem das HMMM-System in Kombination mit einem mittleren/niedrigen Gehalt an Schwefel verwendet wird.

35. Reifen (1) nach Anspruch 28, bei welchem der wenigstens eine die Haftung begünstigende Zusatzstoff eine Kombination des Zusatzstoffs nach Anspruch 29 und des Zusatzstoffs nach Anspruch 33 ist.

36. Reifen (1) nach Anspruch 35, bei welchem die Kombination in einer Kombination mit einer hohen Menge von Schwefel vorliegt.

37. Reifen (1) nach Anspruch 1, bei welchem die Spikes chemisch behandelt sind, bevor sie in die radial äußere Fläche des Laufflächenbandes eingesetzt werden.

38. Reifen (1) nach Anspruch 37, bei welchem die Spikes mit wenigstens einer Schicht aus einem Material überzogen sind, das aus Messing und Legierungen ausgewählt ist, die Cu, Zn, Ni, Co oder Mn enthalten.

39. Reifen (1) nach Anspruch 38, bei welchem die Spikes mit einer Metallzusammensetzung vermessingt sind, die aus 30 bis 40 Gew.-% Zink und 70 bis 60 Gew.-% Kupfer besteht, um eine Messingschicht mit einer Dicke von 1 µm bis 2 µm zu bilden.

40. Verwendung einer elastomeren Masse mit
(a) wenigstens einem elastomeren Dienpolymer und
(b) wenigstens einem geschichteten anorganischen Material in Nanogröße als Verstärkungsfüllstoff
zur Verbesserung der Fähigkeit eines Laufflächenbandes (34) für einen Reifen, der eine Vielzahl von Spikes (300) aufweist, die teilweise aus einer radial äußeren Fläche von ihm vorstehen, um die Spikes (300) in Position zu halten.

41. Verwendung nach Anspruch 40, bei welchem das geschichtete anorganische Material (b) ein Material ist, wie es in einem der Ansprüche 2, 3 und 6 bis 10 definiert ist.

42. Verwendung nach Anspruch 40, bei welchem das geschichtete anorganische Material (b) in der elastomeren Mischung in einer Menge von 1 phr bis 120 phr vorhanden ist.

43. Verwendung nach Anspruch 40, bei welcher das geschichtete anorganische Material (b) in der elastomeren Mischung in einer Menge von 5 phr bis 80 phr vorhanden ist.

44. Verwendung nach Anspruch 40, bei welcher das elastomere Dienpolymer (a) ein Polymer ist, wie es in einem der Ansprüche 11 bis 15 definiert ist.

45. Verwendung nach Anspruch 40, bei welcher die elastomere Mischung wenigstens einen Ruß als zusätzlichen Verstärkungsfüllstoff (c) aufweist.

46. Verwendung nach Anspruch 45, bei welcher der wenigstens eine Ruß-Verstärkungsfüllstoff(c) eine spezifische Oberfläche von nicht weniger als 20m²/g (bestimmt durch CTAB-Absorption, wie es in der Norm ISO 6810 beschrieben ist) hat.

47. Verwendung nach Anspruch 45 oder 46, bei welcher der wenigstens eine Ruß-Verstärkungsfüllstoff(c) in der elastomeren Mischung in einer Menge von 0,1 phr bis 120 phr vorhanden ist.

48. Verwendung nach Anspruch 47, bei welcher der wenigstens eine Ruß-Verstärkungsfüllstoff (c) in der elastomeren Mischung in einer Menge von 20 phr bis 90 phr vorhanden ist.

49. Verwendung nach Anspruch 40, bei welcher die elastomere Mischung wenigstens einen zusätzlichen Verstärkungsfüllstoff in einer Menge von 0,1 phr bis 120 phr aufweist.

50. Verwendung nach Anspruch 49, bei welcher wenigstens ein weiterer zusätzlicher Verstärkungsfüllstoff in einer Menge von 20 phr bis 90 phr vorhanden ist.

51. Verwendung nach Anspruch 49, bei welchem der wenigstens eine weitere zusätzliche Verstärkungsfüllstoff Siliciumdioxid ist.

52. Verwendung nach Anspruch 40, bei welcher die elastomere Mischung wenigstens ein Silan (d) einschließt.

53. Verwendung nach Anspruch 52, bei welchem das wenigstens eine Silan (d) ein Silan ist, wie es in Anspruch 24 oder 25 definiert ist.

54. Verwendung nach Anspruch 52, bei welcher das wenigstens eine Silan (d) in der elastomeren Mischung in einer Menge von 0,01 phr bis 10 phr vorhanden ist.

55. Verwendung nach Anspruch 54, bei welcher das wenigstens eine Silan (d) in der elastomeren Mischung in einer Menge von 0,5 phr bis 5 phr vorhanden ist.

56. Verwendung nach Anspruch 40, bei welcher die elastomere Mischung wenigstens einen die Haftung begünstigenden Zusatzstoff (e) aufweist.

57. Verwendung nach Anspruch 56, bei welchem der die Haftung begünstigende Zusatzstoff (e) ein Zusatzstoff ist, wie er in einem der Ansprüche 29 bis 36 definiert ist.

58. Verwendung nach Anspruch 40, bei welcher die Spikes (300) chemisch behandelt sind, bevor sie in die radial äußere Fläche des Laufflächenbandes (34) eingesetzt werden.

59. Verwendung nach Anspruch 58, bei welchem die Spikes (300) mit wenigstens einer Schicht aus einem Material überzogen sind, das aus Messing und Legierungen ausgewählt wird, die Cu, Zn, Ni, Co oder Mn enthalten.

60. Verwendung nach Anspruch 59, bei welcher die Spikes mit einer Metallzusammensetzung vermessingt sind, die aus 30 bis 40 Gew.-% Zink und 70 bis 60 Gew.-% Kupfer besteht, um eine Messingschicht mit einer Dicke von 1 µm bis 2 µm zu bilden.

## Revendications

1. Pneumatique (1) pour roue de véhicule, comprenant :
- une structure de carcasse (2) comprenant au moins un pli (4) de carcasse doté d'une configuration sensiblement toroïdale, dont les bords latéraux opposés (6) sont associés à des tringles respectives droite et gauche (8) de talon, chaque tringle (8) de talon étant enfermée dans un talon respectif (3) ;
- une structure de ceinture (26) appliquée en position externe dans la direction circonférentielle par rapport à ladite structure de carcasse (2) ;
- une bande de roulement (34) superposée dans la direction circonférentielle à ladite structure de ceinture (26), comprenant une surface radialement extérieure à sculptures comportant une pluralité de rainures longitudinales et transversales (22) qui définissent une pluralité correspondante de crampons et/ou de nervures (18) ;
- une pluralité de clous (300) faisant partiellement saillie depuis ladite surface radialement extérieure de la bande de roulement (34) ; et
- une paire de flancs (10) appliqués latéralement sur des côtés opposés par rapport à ladite structure de carcasse (2) ;
**caractérisée en ce que** ladite bande de roulement (34) comprend une composition élastomère réticulée comportant :
(a) au moins un polymère élastomère diène ;
(b) au moins une nanomatière inorganique en couches, servant de charge de renforcement.

2. Pneumatique (1) selon la revendication 1, dans lequel les différentes couches de ladite matière inorganique (b) en couches ont une épaisseur de 0,01 nm à 30 nm.

3. Pneumatique (1) selon la revendication 2, dans lequel les différentes couches de la matière inorganique (b) en couches ont une épaisseur de 0,1 nm à 15 nm.

4. Pneumatique (1) selon la revendication 1, dans lequel ladite matière inorganique (b) en couches est présente dans la composition élastomère à raison de 1 phr à 120 phr.

5. Pneumatique (1) selon la revendication 4, dans lequel ladite matière inorganique (b) en couches est présente dans la composition élastomère à raison de 5 phr à 80 phr.

6. Pneumatique (1) selon la revendication 1, dans lequel ladite matière inorganique (b) en couches est choisie parmi des phyllosilicates tels que : les smectites ; la vermiculite ; l'halloïsite ; la séricite ; ou des mélanges de celles-ci.

7. Pneumatique (1) selon la revendication 6, dans lequel ladite matière inorganique (b) en couches est choisie parmi des smectites telles que : la montmorillonite, la nontronite, la beidellite, la volkonskoïte, l'hectorite, la saponite, la sauconite ou des mélanges de celles-ci.

8. Pneumatique (1) selon la revendication 7, dans lequel ladite matière inorganique (b) en couches est de la montmorillonite.

9. Pneumatique (1) selon la revendication 1, dans lequel ladite matière inorganique (b) en couches subit un traitement de surface à l'aide d'au moins un agent compatibilisant.

10. Pneumatique (1) selon la revendication 9, dans lequel ledit agent compatibilisant est choisi parmi les sels quaternaires d'ammonium ou de phosphonium ayant la formule générale (I) : 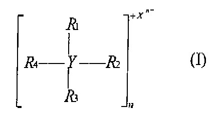 où :
- Y représente N ou P ;
- R₁, R₂, R₃ et R₄, qui peuvent être identiques ou différents, représentent un groupement alcyle ou hydroxyalcyle C₁ à C₂₀ linéaire ou ramifié ; un groupement alcényle ou hydroxyalcényle C₁ à C₂₀ linéaire ou ramifié; un groupement -R₅-SH ou
- R₅-NH dans lequel R₅ représente un groupement alcylène C₁ à C₂₀ linéaire ou ramifié ; un groupement aryle C₆ à C₁₈ ; un groupement arylalkyle ou alkylaryle C₇ à C₂₀ ; un groupement cycloalkyle C₅ à C₁₈, ledit groupement cycloalkyle contenant éventuellement un hétéro-atome tel que de l'oxygène, de l'azote ou du soufre ;
- Xⁿ⁻ représente un anion tel qu'un ion chlore, un ion sulfate ou un ion phosphate ; et
- N représente 1,2 ou 3.

11. Pneumatique (1) selon la revendication 1, dans lequel ledit polymère élastomère diène (a) a une température de transition vitreuse (Tg) inférieure à 20°C.

12. Pneumatique (1) selon la revendication 11, dans lequel ledit polymère élastomère diène (a) a une température de transition vitreuse (T_{g}) inférieure à 10°C.

13. Pneumatique (1) selon la revendication 1, dans lequel ledit polymère élastomère diène (a) est choisi parmi le cis-1,4-polyisoprène (naturel ou synthétique, de préférence du caoutchouc naturel), le 3,4-polysioprène, le polybutadiène (en particulier un polybutadiène à forte teneur en motifs 1,4-cis), des copolymères isoprène-isobutène éventuellement hallogénés, des copolymères 1,3-butadiène-acrylonitrile, des copolymères styrène-1,3-butadiène, des copolymères styrène-isoprène-1,3 butadiène, des copolymères styrène-1,3-butadiène-acrylonitrile ou des mélanges de ceux-ci.

14. Pneumatique (1) selon la revendication 1, dans lequel ladite composition élastomère contient au moins 10 % en poids, par rapport au poids total du polymère élastomère diène (a) au moins unique, de caoutchouc naturel.

15. Pneumatique (1) selon la revendication 14, dans lequel ladite composition élastomère contient de 20 % en poids à 90 % en poids, par rapport au poids total du polymère élastomère diène (a) au moins unique, de caoutchouc naturel.

16. Pneumatique (1) selon la revendication 1, dans lequel ladite composition élastomère contient au moins un noir de carbone comme charge supplémentaire de renforcement (c).

17. Pneumatique (1) selon la revendication 16, dans lequel ledit au moins un noir de carbone servant de charge de renforcement (c) a une superficie non inférieure à 20 m²/g (déterminée par absorption de CTAB, comme décrit dans la norme ISO 6810).

18. Pneumatique (1) selon la revendication 16 ou 17, dans lequel ledit au moins un noir de carbone servant de charge de renforcement (c) est présent dans la composition élastomère à raison de 0,1 phr à 120 phr.

19. Pneumatique (1) selon la revendication 18, dans lequel ledit au moins un noir de carbone servant de charge de renforcement (c) est présent dans la composition élastomère à raison de 20 phr à 90 phr.

20. Pneumatique (1) selon la revendication 16, dans lequel au moins une charge supplémentaire de renforcement est présente à raison de 0,1 phr à 120 phr.

21. Pneumatique (1) selon les revendications 1 et 16, dans lequel ladite composition élastomère contient au moins une autre charge supplémentaire de renforcement à raison de 20 phr à 90 phr.

22. Pneumatique (1) selon la revendication 21, dans lequel ladite au moins une autre charge supplémentaire de renforcement est de la silice.

23. Pneumatique (1) selon la revendication 1, dans lequel ladite composition élastomère contient au moins un silane (d).

24. Pneumatique (1) selon la revendication 23, dans lequel ledit au moins un silane (d) est choisi parmi ceux ayant au moins un groupement silane hydrolisable qui peut être identifié par la formule générale (II) suivante :
(R)₃Si-CyH_{2y}-Z (II)
où les groupements R, qui peuvent être identiques ou différents, sont choisis parmi des groupements alkyle, alcoxy ou aryloxy ou parmi des atomes d'halogènes, sous réserve qu'au moins un des groupements R soit un groupement alcoxy ou aryloxy ; n est un entier de 1 à 6 ; Z est un groupement choisi parmi : nitroso, mercapto, amino, époxyde, vinyle, imide, chloro, -(S)ₘC_{y}H_{2y}-Si-R₃ où m et y sont des entiers de 1 à 6 et les groupements R sont définis de la manière ci-dessus.

25. Pneumatique (1) selon la revendication 24, dans lequel ledit au moins un silane (d) choisi parmi le tétrasulfure de bis (3-triéthoxysilylpropyl) et le disulfure de bis (3-triéthoxysilylpropyl).

26. Pneumatique (1) selon la revendication 23, dans lequel ledit au moins un silane (d) est présent dans la composition élastomère à raison de 0,01 phr à 10 phr.

27. Pneumatique (1) selon la revendication 26, dans lequel le silane au moins unique (d) est présent dans la composition élastomère à raison de 0,5 phr à 5 phr.

28. Pneumatique (1) selon la revendication 1, dans lequel ladite composition élastomère contient au moins un additif favorisant l'adhérence (e).

29. Pneumatique (1) selon la revendication 28, dans lequel ledit additif favorisant l'adhérence est choisi parmi des complexes organométalliques à base de bore, à base de cobalt ou à base des deux.

30. Pneumatique (1) selon la revendication 29, dans lequel, dans lesdits complexes organométalliques à base de cobalt et de bore, le cobalt et le bore sont liés l'un à l'autre par de l'oxygène.

31. Pneumatique (1) selon la revendication 29, dans lequel lesdits complexes organométalliques sont des carboxylates de cobalt.

32. Pneumatique (1) selon la revendication 31, dans lequel lesdits complexes organométalliques sont des naphténates de cobalt.

33. Pneumatique (1) selon la revendication 28, dans lequel ledit additif (e) au moins unique favorisant l'adhérence est une résorcine/système hexaméthoxyméthylmélamine (HMMM).

34. Pneumatique (1) selon la revendication 33, dans lequel ledit système HMMM est utilisé en combinaison avec une quantité moyenne/faible de soufre.

35. Pneumatique (1) selon la revendication 28, dans lequel ledit additif au moins unique favorisant l'adhérence est une combinaison de l'additif de la revendication 29 et de l'additif de la revendication 33.

36. Pneumatique (1) selon la revendication 35, dans lequel ladite combinaison est en combinaison avec une grande quantité de soufre.

37. Pneumatique (1) selon la revendication 1, dans lequel lesdits clous sont traités chimiquement avant d'être insérés dans la surface radialement extérieure de la bande de roulement.

38. Pneumatique (1) selon la revendication 37, dans lequel lesdits clous sont revêtus d'au moins une couche d'une matière choisie parmi le laiton et des alliages contenant Cu, Zn, Ni, Co ou Mn.

39. Pneumatique (1) selon la revendication 38, dans lequel lesdits clous sont revêtus de laiton à composition métallique constituée de 30% à 40% en poids de zinc et de 70 % à 60 % en poids de cuivre pour former une couche de laiton d'une épaisseur de 1 µm à 2 µm.

40. Utilisation d'une composition élastomère comprenant :
a) au moins un polymère élastomère diène;
b) au moins une nanomatière inorganique en couches servant de charge de renforcement ;
pour améliorer les aptitudes d'une bande de roulement (34) pour un pneumatique comportant une pluralité de clous (300) faisant partiellement saillie depuis une surface radialement extérieure de celui-ci, dans le but de maintenir en place lesdits clous (300).

41. Utilisation selon la revendication 40, dans laquelle ladite matière inorganique (b) en couches est confonne à l'une quelconque des revendication 2, 3 et 6-10.

42. Utilisation selon la revendication 40, dans laquelle ladite matière inorganique (b) en couches est présente dans la composition élastomère à raison de 1 phr à 120 phr.

43. Utilisation selon la revendication 40, dans laquelle ladite matière inorganique (b) en couches est présente dans la composition élastomère à raison de 5 phr à 80 phr.

44. Utilisation selon la revendication 40, dans laquelle ledit polymère élastomère diène (a) est conforme à l'une quelconque des revendications 11 à 15.

45. Utilisation selon la revendication 40, dans laquelle ladite composition élastomère contient au moins un noir de carbone servant de charge supplémentaire de renforcement (c).

46. Utilisation selon la revendication 45, dans laquelle ledit au moins un noir de carbone servant de charge de renforcement (c) a une superficie non inférieure à 20 m²/g (déterminée par absorption de CTAB, comme décrit dans la nonne ISO 6810).

47. Utilisation selon la revendication 45 ou 46, dans laquelle ledit au moins un noir de carbone servant de charge de renforcement (c) est présent dans la composition élastomère à raison de 0,1 phr à 120 phr.

48. Utilisation selon la revendication 47, dans laquelle ledit au moins un noir de carbone servant de charge de renforcement (c) est présent dans la composition élastomère à raison de 20 phr à 90 phr.

49. Utilisation selon la revendication 40, dans laquelle ladite composition élastomère contient au moins une charge supplémentaire de renforcement à raison de 0,1 phr à 120 phr.

50. Utilisation selon la revendication 49, dans laquelle au moins une autre charge supplémentaire de renforcement est présente à raison de 20 phr à 90 phr.

51. Utilisation selon la revendication 49, dans laquelle ladite au moins une autre charge supplémentaire de renforcement est de la silice.

52. Utilisation selon la revendication 40, dans laquelle ladite composition élastomère contient au moins un silane (d).

53. Utilisation selon la revendication 52, dans laquelle ledit au moins un silane (d) est conforme à l'une quelconque des revendications 24ou25.

54. Utilisation selon la revendication 52, dans laquelle ledit au moins un silane (d) est présent dans la composition élastomère à raison de 0,01 phr à 10 phr.

55. Utilisation selon la revendication 54, dans laquelle le silane au moins unique (d) est présent dans la composition élastomère à raison de 0,5 phr à 5 phr.

56. Utilisation selon la revendication 40, dans laquelle ladite composition élastomère contient au moins un additif (e) favorisant l'adhérence.

57. Utilisation selon la revendication 56, dans laquelle ledit additif (e) favorisant l'adhérence est conforme à la définition de l'une quelconque des revendications 29 à 36.

58. Utilisation selon la revendication 40, dans laquelle lesdits clous (300) sont traités chimiquement avant d'être insérés dans la surface radialement extérieure de la bande de roulement (34).

59. Utilisation selon la revendication 58, dans laquelle lesdits clous (300) sont revêtus d'au moins une couche d'une matière choisie parmi le laiton et des alliages contenant Cu, Zn, Ni, Co ou Mn.

60. Utilisation selon la revendication 59, dans laquelle lesdits clous sont revêtus de laiton à composition métallique comprenant de 30 % à 40 % en poids de zinc et de 70 % à 60 % en poids de cuivre afin de former une couche de laiton d'une épaisseur de 1 µm à 2 µm.
